# EUROPÄISCHE PATENTSCHRIFT

(11) **EP 3 137 885 B1**
(45) Veröffentlichungstag und Bekanntmachung des Hinweises auf die Patenterteilung: **09.05.2018**
(21) Anmeldenummer: 15713482.6
(22) Anmeldetag: 31.03.2015
(51) Int. Cl.: G01N 23/203, G01N 23/2206, G01N 23/2252

(54) **VERFAHREN ZUR IDENTIFIKATION KRISTALLINER PHASEN**
METHOD FOR IDENTIFYING CRYSTALLINE PHASES
PROCÉDÉ D'IDENTIFICATION DE PHASES CRISTALLINES

(30) Priorität: 02.05.2014 DE 102014208295
(43) Veröffentlichungstag der Anmeldung: 08.03.2017
(73) Patentinhaber: Bruker Nano GmbH, 12489 Berlin (DE)
(72) Erfinder: SCHWAGER, Thomas, 10247 Berlin (DE)
(74) Vertreter: Gulde & Partner
(86) Internationale Anmeldenummer: PCT/EP2015/057082
(87) Internationale Veröffentlichungsnummer: WO 2015/165681

(56) Entgegenhaltungen:
- US-A1- 2004 011 958
- KIM JU-HEON ET AL: "Investigation into the high temperature oxidation of Cu-bearing austenitic stainless steel using simultaneous electron backscatter diffraction-energy dispersive spectroscopy analysis", CORROSION SCIENCE, Bd. 77, 28. August 2013 (2013-08-28), Seiten 397-402, XP028734966, ISSN: 0010-938X, DOI: 10.1016/J.CORSCI.2013.08.015
- VINEET KUMAR ET AL: "Microstructural analysis of lead-free solder alloys", METALLURGICAL AND MATERIALS TRANSACTIONS A, SPRINGER-VERLAG, NEW YORK, Bd. 37, Nr. 8, 1. August 2006 (2006-08-01) , Seiten 2505-2514, XP019696229, ISSN: 1543-1940
- VALERIE RANDLE: "Applications of electron backscatter diffraction to materials science: status in 2009", JOURNAL OF MATERIALS SCIENCE, KLUWER ACADEMIC PUBLISHERS, BO, Bd. 44, Nr. 16, 26. Mai 2009 (2009-05-26), Seiten 4211-4218, XP019679907, ISSN: 1573-4803

## Beschreibung

Die Erfindung betrifft ein Verfahren zur Identifikation kristalliner Phasen in einer polykristallinen Probe.

### Technologischer Hintergrund

Die Identifikation kristallographischer Mikrostrukturen ist in vielen Bereichen der Technik von erheblicher Bedeutung, beispielsweise bei metallischen Werkstücken, die hohen Belastungen ausgesetzt sind, wie in Flugzeugen und Automobilen. Beispielsweise offenbaren US 2004/0011958 A1, KIM JU-HEON ET AL: "Investigation into the high temperature oxidation of Cu-bearing austenitic stainless steel using simultaneous electron backscatter diffraction-energy dispersive spectroscopy analysis", CORROSION SCIENCE, Bd. 77, 28. August 2013, Seiten 397-402, VINEET KUMAR ET AL: "Microstructural analysis of lead-free solder alloys", METALLURGICAL AND MATERIALS TRANSACTIONS A, SPRINGER-VERLAG, New York, Bd. 37, Nr. 8, 1. August 2006, Seiten 2505-2514, und VALERIE RANDLE: "Applications for electron backscatter diffraction to materials science: status in 2009", JOURNAL OF MATERIALS SCIENCE, KLUWER ACADEMIC PUBLISHERS, BO, Bd. 44, Nr. 16, 26. Mai 2009, Seiten 4211-4218, Verfahren zur Identifikation kristalliner Phasen in einer mono- oder polykristallinen Probe.

In der Regel wird zunächst die chemische Zusammensetzung der zu untersuchenden Probe ermittelt. Eine Standardmethode der Materialanalytik, die zu diesen Zwecken Einsatz findet, ist die energiedispersive Röntgenspektroskopie (EDX). Zur Anregung wird ein Elektronenstrahl einheitlicher Energie auf den jeweiligen Messpunkt der Probe gerichtet und die resultierende Röntgenemission detektiert. Die erfasste charakteristische Röntgenstrahlung gibt Aufschluss über die Elementzusammensetzung der Probe.

Die Elektronenrückstreubeugung (EBSD; Electron Backscatter Diffraction) ist eine Methode der Strukturaufklärung, die zur Identifikation von Kristallen in einer Probe dient. Bei diesem Verfahren wird die Beugung von Elektronen am Kristallgitter (das sogenannte Beugungsbild) zu Zwecken der Phasenanalyse beziehungsweise Kristallstrukturanalyse ausgewertet. Ein Beugungsbild besteht dabei aus einer Reihe von Beugungsbändern, deren Lage von der Kristallstruktur am Probenort und von der lokalen Orientierung des Kristalls abhängt. Die Auswertung der Beugungsbilder erfordert daher zwingend die Kenntnis der vorhandenen Kristallstruktur. Aus der Kenntnis dieser Kristallstruktur wird vorhergesagt, wie die Beugungsbänder bei einer gegebenen Orientierung im Beugungsbild liegen müssten.

Die zur Vorhersage der Beugungsbänder nötigen Strukturdaten vieler Tausend bekannter Kristallstrukturen sind in Datenbanken zusammengestellt und dienen als Referenzen zur Identifikation bisher unbekannter Phasen einer vermessenen Probe. Aus den Strukturdaten können mit mathematischen Verfahren die Lage der interessierenden Bänder in den Pattern einer Vielzahl von Orientierungen vorhergesagt werden. In der Praxis werden anhand bestimmter Auswahlkriterien, zumeist der chemischen Zusammensetzung, Kristallstrukturen in der Datenbank vorselektiert, die man in der Probe vermutet.

Nachdem von der Probe das Beugungsbild gewonnen wurde, wird dann mittels geeigneter Suchverfahren auf Grundlage des Beugungsbildes der unbekannten Probe die Orientierung bestimmt, bei der die Vorhersage am besten mit der Messung übereinstimmt. Hat man die korrekte Kristallstruktur gewählt, so erhält man eine gute Übereinstimmung, ansonsten ist die Übereinstimmung schlecht. Beispiele für Verfahren zur Orientierungsbestimmung sind beispielsweise beschrieben in den Veröffentlichungen: Wright, S. I. und B. L. Adams: Automated Lattice Orientation Determination from Electron Backscatter Kikuchi Diffraction Paterns, Textures and Microstructures, vol. 14, pp. 273-278, 1991. doi: 10.1155/TSM.14-18.273; Schwarzer, Robert A.: Automated Crystal Lattice Orientation Mapping Using a Computer-controlled SEM, Micron, Volume 28, Number 3, June 1997, pp. 249-265(17) oder Zaefferer S. und R. A. Schwarzer: On-line Interpretation of Spot and Kikuchi Patterns, Materials Science Forum Volumes 157 - 162 (1994) pp 247-250.

Der Grad der Übereinstimmung wird primär durch die Anzahl der innerhalb einer gewissen Toleranz erfolgreich erklärten Beugungsbänder angegeben. Man nimmt also eine gewisse Abweichung der theoretischen Beugungsbänder von den tatsächlich gemessenen in Kauf. Der Grad dieser Abweichung - der Winkelfehler - ist ein sekundäres Maß der Übereinstimmung. Werden mehrere Kristallstrukturen in der Probe vermutet, dann wird das Auswerteverfahren für alle Kandidaten wiederholt. Der Kandidat mit der besten Übereinstimmung wird mit dem Probenort identifiziert.

### Zusammenfassung der Erfindung

Mit Hilfe des erfindungsgemäßen Verfahrens zur Identifikation kristalliner Phasen in einer polykristallinen Probe können ein oder mehrere Nachteile des Standes der Technik behoben oder zumindest gemindert werden. Das Verfahren ist in Anspruch 1 gegeben. Der Erfindung liegt die Erkenntnis zugrunde, dass die Identifikation unbekannter kristalliner Phasen in einer polykristallinen Probe erheblich beschleunigt werden kann, wenn bei der Ermittlung der chemischen Information nicht ganze Datensätze abgeglichen werden, sondern anstelle dessen normierte Vektoren herangezogen und bestimmt werden. Dazu wird vorzugsweise zunächst eine Liste von Strukturinformationen bzw. Kristallstrukturen, die in der Probe vermutet werden, erstellt. Bei den Strukturinformationen handelt es sich beispielsweise um Abmessungen und Form von Einheitszellen und/oder um die Atomposition(en). Die entsprechenden Datensätze zu jeder dieser vermuteten Kristallstrukturen enthalten neben den Strukturinformationen Angaben zur chemischen Zusammensetzung. Die relevanten Beugungsbänder werden vorab anhand hinterlegter Strukturinformationen vorhergesagt. Alternativ oder ergänzend können auch Informationen über die relevanten Beugungsbänder, die aus vermessenen Elektronenbeugungsbildern gewonnen wurden, eingelesen werden.

Diese Liste repräsentiert einen wichtigen Teil der analytische Fragestellung des Anwenders ("wo auf der Probe befindet sich Struktur A, wo Struktur B" usw.). Die Liste kann auf unterschiedliche Weise produziert werden. In einer bevorzugten Ausführungsform der Erfindung ist vorgesehen, dass die Liste gespeichert und später bei Bedarf durch ein Programm, beispielsweise durch ein Auswertungsprogramm, geladen werden kann. Gemäß einer anderen bevorzugten Ausführungsform ist vorgesehen, dass sich das Programm die verwendeten Listen merkt. So ist es beispielsweise möglich, eine einmal verwendete Liste für beliebig viele Messungen zu nutzen, ohne die Liste jedes Mal separat erneut zusammenstellen zu müssen. Dies ist insbesondere für (Mess-) Systeme von Vorteil, auf denen Routinemessungen eingerichtet sind.

Ferner erweist es sich als vorteilhaft, wenn ein Nutzer die Möglichkeit hat, die benötigten Strukturinformationen, also Abmessungen und Form der Einheitszelle und die Atompositionen direkt in das Programm einzugeben.

Darüber hinaus sieht eine bevorzugte Ausführungsform vor, dass ein Nutzer die nötigen Informationen über eine Kristallstruktur aus Dateien eines universellen Austauschformats bezieht oder lädt. Das verbreitetste Austauschformat ist das CIF (Crystallographic Information File), es gibt von einzelnen Anbietern allerdings eine Reihe anderer Formate. Diese Strukturfiles sind in freien und kommerziellen Datenbanken zusammengefasst. Wichtige Anbieter sind die AMCSD (American Mineralogist Crystal Structure Database) und die ICSD (Inorganic Crystal Structure Database). Diese Datenbanken haben ein Interface (z.B. ein Webinterface oder ein proprietäres Suchprogramm), welches dem Nutzer ermöglicht, nach unterschiedlichen Kriterien zu suchen, z.B. Vorhandensein von bestimmten Elementen, Symmetrietyp o.ä. Die Suchtreffer können als CIF abgespeichert und in ein erfindungsgemäßes (Auswertungs-)Programm geladen werden.

Um Nutzer von der Notwendigkeit zu befreien, externe Programme zur Struktursuche zu benutzen, sieht eine bevorzugte Ausführungsform vor, dass die Standardsuchen (Vorhandensein von gewissen Elementen und Strukturnamen) in dem erfindungsgemäßen (Auswertungs-)Programm ausführbar ist (ggf. sofern sie die evtl. benötigten kommerziellen Datenbanken gekauft haben).

Im Schritt a) des erfindungsgemäßen Verfahrens wird dann ein normierter Vektor p(i) für die chemische Zusammensetzung festgesetzt. Die Basis des Vektors repräsentiert chemische Elemente und/oder chemische Verbindungen und die Koordinaten des Vektors umfassen zumindest Angaben über die Konzentration der chemischen Elemente und/oder der chemischen Verbindungen innerhalb der Kristallstruktur. Die Koordinaten des normierten Vektors p(i) sind vorzugsweise proportional zu der Konzentration der chemischen Elemente und/oder der chemischen Verbindungen bzw. zu den einzelnen Elementhäufigkeiten. Der Proportionalitätsfaktor ist so zu wählen, dass die Summe der Quadrate der Koordinaten Eins ist.

Eine bevorzugte Ausführungsform der Erfindung sieht vor, dass die chemische Auswertung mit festen Element- und/oder Verbindungslisten arbeitet. Die Reihenfolge und Art der Elemente und/oder Verbindungen kann von einem Nutzer frei gewählt werden, beispielsweise anhand der in der Probe voraussichtlich vorhandenen Elemente und/oder Verbindungen, z.B. O, Si, Fe, Cu. Die Liste stellt somit die Basis der Vektoren dar. Die Konzentrationen werden in die zu den jeweiligen Elementen und/oder Verbindungen gehörigen Komponenten des Vektors eingetragen. Anschließend wird der Vektor normiert. Dazu werden alle Koordinaten des Vektors mit einem gemeinsamen Faktor multipliziert, der so gewählt wird, dass die Summe der Quadrate der normierten Koordinaten Eins ist. Der Faktor ist gleich dem Kehrwert der Quadratwurzel der Summe der Quadrate der unnormierten Koordinaten.

Im Schritt b) des erfindungsgemäßen Verfahrens erfolgt eine Vermessung der Probe, wobei an jedem Messpunkt ein EDX-Spektrum und ein Elektronenbeugungsbild aufgenommen wird. Anhand des EDX-Spektrums wird die Elementzusammensetzung der Probe am Messpunkt bestimmt.

Aus der in Schritt b) gewonnenen chemischen Zusammensetzung der Probe an den Messpunkten wird die Konzentrationen der Elemente und/oder Verbindungen bestimmt.

Im Schritt c) werden die Konzentrationen einfach in die Koordinaten des Vektors v in der Reihenfolge der Elementliste eingetragen. Also im Beispiel:
1. Koordinate = Konzentration von Sauerstoff,
2. Koordinate = Konzentration von Silizium,
usw.

Danach wird der Vektor v normiert. Der Vektor v repräsentiert somit die chemische Zusammensetzung am Messpunkt, wobei die Koordinaten Angaben über die Konzentration der Elemente und/oder Verbindungen am Messpunkt umfassen. Vorzugsweise sind Koordinaten wiederum proportional zu den einzelnen Elementhäufigkeiten. Auch hier ist der Proportionalitätsfaktor so zu wählen, dass die Summe der Quadrate der Koordinaten Eins ist. Das geschieht beispielsweise durch Bestimmung der Wurzel der Summe der Koordinatenquadrate und nachfolgender Division aller Koordinaten durch diesen Wert.

Anschließend werden in Schritt d) nur noch die normierten Vektoren des Messpunktes und der vermuteten Kristallstrukturen verglichen, wobei dieser Vergleich zur Ausgabe eines Bewertungsfaktors s(i) für die jeweilige Übereinstimmung der Vektoren führt. Hier kann als Bewertungsfaktor s(i) insbesondere der Kehrwert des Abstands des normierten Vektors v der chemischen Zusammensetzung am Messpunkt vom jeweiligen normierten Vektor p(i) der chemischen Zusammensetzung der vermuteten Kristallstrukturen benutzt werden. Ebenso ist denkbar, den Kehrwert des Abstandsquadrats zur Ermittlung des Bewertungsfaktors heranzuziehen. In den genannten Fällen nimmt der Bewertungsfaktor s(i) bei guter Übereinstimmung hohe Werte an.

Der Vergleich erfolgt beispielsweise durch Bildung des Skalarprodukts (SKP) zweier Vektoren. Wenn die Übereinstimmung gut ist, dann ist dieser Wert nahe Eins, ansonsten ist er kleiner, bis hin zu einem Minimum von -1. Gemäß einer bevorzugten Ausführungsform wird das Skalarprodukt danach in einen Gütewert umgewandelt. Beispielsweise kann der Gütewert zu 1/(1 - SKP*SKP) bestimmt werden. In einer anderen Ausführungsform kann statt dessen die Quadratwurzel dieses Wertes benutzt werden. Der Gütewert ist hoch, wenn die Übereinstimmung gut ist. Allgemein kann der Vergleich erfolgen, indem ein erster Vektor auf eine vorgegebene Gerade, insbesondere auf die durch den zweiten Vektor definierte Gerade, projiziert und die Länge des projizierten Vektors vermessen wird, wobei die Länge den Gütewert repräsentiert.

Im Schritt e) folgt ein Vergleich der messpunktbestimmten Beugungsbänder mit den Beugungsbändern der vermuteten Kristallstrukturen unter Ausgabe eines Bewertungsfaktors n(i) für die Übereinstimmung der Beugungsbänder. Der Wert von n(i) ist die Anzahl der durch die Kristallstruktur erfolgreich erklärten gemessenen Beugungsbänder. Anhand der beiden Bewertungsfaktoren s(i) und n(i) wird schließlich im Schritt f) eine Gesamtgüte ermittelt. In einer bevorzugten Ausführungsform kann die Gesamtgüte durch Addition von n(i) und s(i) bestimmt werden. Die Kristallstruktur mit der höchsten Gesamtgüte wird dem Messpunkt zugeordnet.

Alternativ können zunächst die Beugungsbänder (Schritt e)) und dann erst die chemische Information (Schritte c) und d)) ausgewertet werden.

In einer weiteren Ausführungsform kann neben den Bewertungsfaktoren n(i) und s(i) auch noch der Winkelfehler w(i) zur Bestimmung der Gesamtgüte herangezogen werden. Der Winkelfehler w(i) ergibt sich durch den Vergleich der Lagen der erfolgreich erklärten Beugungsbänder mit den Lagen der vorhergesagten Beugungsbänder. Er nimmt bei guter Übereinstimmung kleine Werte an.

In einer beispielhaften Ausführungsform kann die Gesamtgüte durch Bildung der Summe aus n(i) und s(i), von der w(i) subtrahiert wird, bestimmt werden.

Die Beugungsbänder repräsentieren Gitterebenen, welche ihrerseits durch die Angabe der Richtung ihrer Ebenennormalen repräsentiert werden. Zu jedem gemessenen Beugungsband kann also die sie repräsentierende Ebenennormale bestimmt werden, in einer beispielhaften Ausführungsform durch Konstruktion der Ebene die durch die Mitte des gemessenen Beugungsbands auf dem Kameraschirm und den gemessenen Punkt auf der Probe geht. In einer beispielhaften Ausführungsform kann der Winkelfehler durch die Bestimmung der Summe der Winkel zwischen den die gemessenen Bänder repräsentierenden Flächennormalen und den die jeweils zugehörigen vorhergesagten Bänder repräsentierenden Flächennormalen bestimmt werden. In einer weiteren Ausführungsform wird statt der Winkelsumme der Mittelwert der Winkel bestimmt. In einer weiteren Ausführungsform wird die Quadratwurzel des Mittelwerts der Quadrate der Einzelwinkel verwendet.

In einer weiteren Ausführungsform können zur Bestimmung der Gesamtgüte statt der Werte n(i), s(i) und eventuell w(i) auch mit Gewichtsfaktoren multiplizierte Bewertungsfaktoren n(i), s(i) und/oder w(i) verwendet werden, wobei die Gewichtsfaktoren die relative Relevanz der Bewertungsfaktoren widergeben,

Eine Anordnung mit mindestens einem Chip und/oder Prozessor kann dazu eingerichtet sein ein Verfahren gemäß Anspruch 1 auszuführen.

Diese Anordnung ist nicht Bestandteil der, allerdings hilfreich für das Verständnis der beanspruchten Erfindung.

Ein Computerprogramm kann einer Anordnung mit einer Datenverarbeitungseinrichtung ermöglichen, nachdem es in Speichermittel der Datenverarbeitungseinrichtung geladen worden ist, ein Verfahren gemäß Anspruch 1 auszuführen. Dieses Computerprogramm ist nicht Bestandteil der, allerdings hilfreich für das Verständnis der beanspruchten Erfindung

Das Computerprogramm kann modular aufgebaut sein, wobei einzelne Programmmodule auf verschiedenen Teilen der Datenverarbeitungseinrichtung, beispielsweise eines verteilten Systems, installiert sind.

Vorteilhafte Beispiele sehen zusätzlich Computerprogramme vor, durch welche weitere in der Beschreibung angegebene Verfahrensschritte oder Verfahrensabläufe ausgeführt werden können.

Ebenso kann auf einem computerlesbaren Speichermedium ein Programm gespeichert sein, welches einer Anordnung mit einer Datenverarbeitungseinrichtung ermöglicht, nachdem es in Speichermittel der Datenverarbeitungseinrichtung geladen worden ist, ein Verfahren gemäß Anspruch 1 auszuführen. Das computerlesbare Speichermedium ist nicht Bestandteil der, jedoch hilfreich für das Verständnis der beanspruchten Erfindung.

## Patentansprüche

1. Verfahren zur Identifikation kristalliner Phasen in einer polykristallinen Probe, umfassend die Verfahrensschritte:
a) für Kristallstrukturen, die in der Probe vermutet werden, jeweils Bestimmung eines normierten Vektors p(i) für die chemische Zusammensetzung der Kristallstruktur, wobei die Basis des Vektors Elemente und/oder Verbindungen repräsentiert und die Koordinaten des Vektors Angaben über die Konzentration der Elemente und/oder Verbindungen innerhalb der Kristallstruktur umfassen;
b) an jedem Messpunkt der Probe:
(i) Aufnahme eines Spektrums mittels energiedispersiver Röntgenspektroskopie und Bestimmung der chemischen Zusammensetzung und
(ii) Aufnahme eines Elektronenbeugungsbildes und Bestimmung der Beugungsbänder;
c) Bestimmung eines normierten Vektors v für die chemische Zusammensetzung am Messpunkt, dessen Koordinaten Angaben über die Konzentration der Elemente und/oder Verbindungen am Messpunkt umfassen;
d) Vergleich des normierten Vektors v für die chemische Zusammensetzung am Messpunkt mit jedem der normierten Vektoren p(i) der vermuteten Kristallstrukturen unter Ausgabe eines Bewertungsfaktors s(i) für die jeweilige Übereinstimmung der Vektoren;
e) für die vermuteten Kristallstrukturen Vergleich der am Messpunkt bestimmten Beugungsbänder mit den Beugungsbändern der vermuteten Kristallstruktur unter Ausgabe eines Bewertungsfaktors n(i) für die Übereinstimmung der Beugungsbänder; und
f) für die vermuteten Kristallstrukturen Bestimmung einer Gesamtgüte aus den beiden Bewertungsfaktoren s(i) und n(i) und Zuordnung der Kristallstruktur mit der höchsten Gesamtgüte zum Messpunkt.

2. Verfahren nach Anspruch 1, bei dem der Bewertungsfaktor s(i) aus Schritt d) als Kehrwert des Abstands oder Abstandsquadrats des normierten Vektors v der chemischen Zusammensetzung am Messpunkt vom jeweiligen normierten Vektor p(i) der chemischen Zusammensetzung der vermuteten Kristallstrukturen bestimmt wird.

3. Verfahren nach Anspruch 1 oder 2, bei dem Schritt e) vor den Schritten c) und d) ausgeführt wird.

4. Verfahren nach einem der voranstehenden Ansprüche, bei dem im Schritt a) die Normierung derart erfolgt, dass die Summe der Quadrate aller Elementhäufigkeiten Eins ist.

5. Verfahren nach einem der voranstehenden Ansprüche, bei dem im Schritt e) für den Vergleich ein Skalarprodukt ausgewertet wird.

6. Verfahren nach einem der voranstehenden Ansprüche, wobei eine Liste von Kristallstrukturen, die in der Probe vermutet werden, bereitgestellt wird.

7. Verfahren nach Anspruch 6, wobei zu jeder Kristallstruktur zumindest eine der folgenden Informationen hinterlegt ist:
- die chemische Zusammensetzung,
- ein Elektronenbeugungsbild mit einer Vielzahl von Beugungsbändern oder
- zur Vorhersage der Beugungsbänder nötige Strukturdaten.

## Claims

1. Method for the identification of crystalline phases in a polycrystalline sample, comprising the method steps:
a) for crystal structures which are assumed to be in the sample, determining a normalized vector p(i) for the chemical composition of the crystal structure in each case, wherein the basis of the vector represents elements and/or compounds and the coordinates of the vector comprise details relating to the concentration of the elements and/or compounds within the crystal structure;
b) at each measuring point of the sample:
(i) acquiring a spectrum by means of energy-dispersive X-ray spectroscopy and determining the chemical composition and
(ii) acquiring an electron diffraction pattern and determining the diffraction bands;
c) determining a normalized vector v for the chemical composition at the measuring point whereof the coordinates comprise details relating to the concentration of the elements and/or compounds at the measuring point;
d) comparing the normalized vector v for the chemical composition at the measuring point to each of the normalized vectors p(i) of the assumed crystal structures while outputting an evaluation factor s(i) for the respective correspondence of the vectors;
e) for the assumed crystal structures, comparing the diffraction bands determined at the measuring point to the diffraction bands of the assumed crystal structure and outputting an evaluation factor n(i) for the correspondence of the diffraction bands; and
f) for the assumed crystal structures, determining an overall quality from the two evaluation factors s(i) and n(i) and assigning the crystal structure with the highest overall quality to the measuring point.

2. Method according to Claim 1, in which the evaluation factor s(i) from step d) is determined as a reciprocal of the distance or square of the distance of the normalized vector v of the chemical composition at the measuring point from the respective normalized vector p(i) of the chemical composition of the assumed crystal structures.

3. Method according to Claim 1 or 2, in which step e) is carried out before the steps c) and d).

4. Method according to any one of the preceding Claims, in which, in step a), the normalization takes place in such a way that the sum of the squares of all element abundances is one.

5. Method according to any one of the preceding Claims, in which, in step e), a scalar product is evaluated for the comparison.

6. Method according to any one of the preceding Claims, wherein a list of crystal structures which are assumed to be in the sample is provided.

7. Method according to Claim 6, wherein, for each crystal structure, at least one of the following information is recorded:
- the chemical composition,
- an electron diffraction pattern with a plurality of diffraction bands, or
- structural data required for predicting the diffraction bands.

## Revendications

1. Procédé pour l'identification de phases cristallines dans un échantillon polycristallin, comprenant les étapes de procédé suivantes :
a) pour des structures cristallines dont l'existence est supposée dans l'échantillon, détermination d'un vecteur normé p(i) pour la composition chimique de la structure cristalline, respectivement, la base du vecteur représentant des éléments et/ou des liaisons et les coordonnées du vecteur comprenant des indications sur la concentration des éléments ou des liaisons au sein de la structure cristalline ;
b) à chaque point de mesure de l'échantillon :
(i) enregistrement d'un spectre au moyen de spectroscopie des rayons X dispersive en énergie et détermination de la composition chimique, et
(ii) enregistrement d'une figure de diffraction des électrons et détermination des bandes de diffraction ;
c) détermination d'un vecteur normé v pour la composition chimique au point de mesure, dont les coordonnées comprennent des indications sur la concentration des éléments et/ou des liaisons au point de mesure ;
d) comparaison entre le vecteur normé v pour la composition chimique au point de mesure et chacun des vecteurs normés p(i) des structures cristallines dont l'existence est supposée, avec génération d'un facteur d'évaluation s(i) pour la concordance respective des vecteurs ;
e) pour chacune des structures cristallines dont l'existence est supposée, comparaison entre les bandes de diffraction déterminées au point de mesure et la structure cristalline dont l'existence est supposée, avec génération d'un facteur d'évaluation n(i) pour la concordance respective des bandes de diffraction ; et
f) pour chacune des structures cristallines dont l'existence est supposée, détermination d'une qualité globale à partir des deux facteurs d'évaluation s(i) et n(i), et classement de la structure cristalline avec la qualité globale la plus élevée au point de mesure.

2. Procédé selon la revendication 1, par lequel le facteur d'évaluation s(i) de l'étape (d) est déterminé comme inverse de la distance ou du carré de la distance entre le vecteur normé v de la composition chimique au point de mesure et le vecteur normé p(i) respectif de la composition chimique des structures cristallines dont l'existence est supposée.

3. Procédé selon la revendication 1 ou 2, par lequel l'étape e) est exécutée avant les étapes c) et d).

4. Procédé selon l'une des revendications précédentes, sur lequel, à l'étape a), la normalisation est effectuée de telle sorte que la somme des carrés de toutes les fréquences d'éléments est égale à un.

5. Procédé selon l'une des revendications précédentes, sur lequel, à l'étape e), un produit scalaire est analysé pour la comparaison.

6. Procédé selon l'une des revendications précédentes, une liste de structures cristallines dont l'existence est supposée dans l'échantillon étant mise à disposition.

7. Procédé selon la revendication 6, au moins une des informations suivantes étant enregistrées pour chaque structure cristalline :
- la composition chimique,
- une figure de diffraction des électrons avec une pluralité de bandes de diffraction ou
- des données de structure nécessaires pour la prédiction des bandes de diffraction.
